# EUROPEAN PATENT APPLICATION

(11) **EP 2 530 203 A2**
(43) Date of publication of application: **05.12.2012**
(21) Application number: 12170735.0
(22) Date of filing: 04.06.2012
(51) Int. Cl.: E02B 8/08

(54) **Barrier for regulating the level in a watercourse**

(30) Priority: 03.06.2011 NL 2006893
(71) Applicant: A.R.P. Weg- en Waterbouw, 5243 RG Rosmalen (NL)
(72) Inventor: Pennings, Alphonsius René, 5243 RG Rosmalen (NL)
(74) Representative: Langenhuijsen, Bastiaan Wilhelmus Herman

(57) **Abstract**

The water level of a watercourse can be regulated by applying a barrier in order to hold water longer in higher areas so as to prevent these areas drying out. The use of a barrier can also prevent rapid inundation of lower-lying areas. The invention relates to a barrier for regulating the level in a watercourse.

## Description

The invention relates to a barrier for regulating the level in a watercourse.

The water level of a watercourse can be regulated by applying a barrier in order to hold water longer in higher areas so as to prevent these areas drying out. The use of a barrier can also prevent (rapid) inundation of lower-lying areas. At the same time barriers usually form an insurmountable obstacle for fish present in the watercourse. In order to spawn determined species of fish tend to trek upstream where the water is cleaner and richer in oxygen. The barrier can form a life-threatening barrier for these fish species. Barriers can also result in a considerable limitation in the freedom of fish not in the habit of spawning upstream.

In order to obviate the above stated problem so-called fish ladders have been constructed adjacently of some barriers and consisting of a cascade of small pools or basins flowing into each other, whereby a water ladder is in fact generated via which fish can move from a lower water body to a higher water body. An example of a known fish pass for use adjacently of a barrier is described in NL 1031738. The known fish pass is in general relatively voluminous however, this not only being costly but moreover not always desirable from a practical and aesthetic viewpoint, and sometimes even being impossible.

An object of the invention is to provide a barrier provided with an improved fish pass.

The invention provides for this purpose a barrier of the type stated in the preamble, comprising: a housing, which housing comprises at least one first compartment and at least one second compartment between which a passage provided with at least one threshold is positioned to allow water to flow from a first higher-lying water body to a second lower-lying water body, a fish pass which is substantially enclosed by the housing and via which fish can swim from the second water body to the first water body, comprising: a plurality of migration chambers connected in series, wherein a number of migration chambers are positioned in the first compartment and a number of migration chambers in the second compartment, at least one fish outlet with a water inflow opening which connects to at least one first migration chamber and is for placing in the first water body, and at least one fish inlet with a water outflow opening which connects to at least one final migration chamber and is for placing in the second water body. By integrating the fish pass with the barrier, wherein the fish pass is in fact incorporated in the barrier, a relatively compact fish pass can be realized which can be applied in particularly advantageous manner from an aesthetic and practical viewpoint. In order to make the barrier, and in particular the fish pass, suitable for a relatively large drop, the migration chambers of the first compartment are connected to the migration chambers of the second compartment, whereby a relatively large number of serially connected migration chambers can be applied via which fish can move from the (lower) second water body to the (higher) first water body. A serial connection is understood to mean that the migration chambers are in communication with each other such that migration of both water (downstream) and fish (downstream and upstream) is possible. The first compartment and the second compartment are generally also referred to as barrier wings. The term barrier is also interpreted broadly in the context of this patent specification, and can also include a dam, lock, pumping plant or other type of hydraulic-engineering structure with which a separation in level can be realized.

In an embodiment of variant of the barrier at least one migration chamber positioned in the first compartment is connected via at least one aqueduct to at least one migration chamber positioned in the second compartment. The aqueduct extends through the passage of the barrier here and connects two migration chambers of different compartments to each other. The aqueduct can be oriented substantially horizontally here, whereby both migration chambers have substantially the same level. It is however also possible to envisage the aqueduct taking a (slightly) sloping form, whereby the two migration chambers will generally have a differing water level.

In order to not allow the aqueduct to obstruct the regular watercourse, it is generally advantageous for (an underside of) the aqueduct to be located at a distance from the threshold, and more preferably to be located at a higher level than the threshold, whereby water flowing via the passage over the threshold will not come into contact with the aqueduct. In a further embodiment of the barrier the effective height (level) of the threshold can be regulated, generally by applying manual or automatic operating means. For this purpose the threshold can for instance form part of a height-displaceable slide. It is also possible to envisage the threshold forming part of a barrier valve connected displaceably, in particular pivotally, to the barrier, whereby a tilting gate is in fact formed. It is also advantageous for an upper side of the aqueduct to take an at least partially light-transmitting form, which will generally enhance the fish well-being. The same applies for the upper side of the migration chambers. The migration chambers and the aqueduct can optionally be covered by means of gratings.

Successive compartments are preferably separated from each other by applying a baffle, wherein each baffle is provided with at least one migration opening for migration of fish and water. The height positioning of the migration openings of successive baffles preferably decreases, and preferably decreases gradually, in the direction of the final migration chamber. It is advantageous here that the maximum height difference between the migration openings of successive baffles amounts to 7.5 cm, whereby fish can move sufficiently easily from one migration chamber to a subsequent migration chamber.

In an advantageous embodiment of the barrier the fish inlet and/or the fish outlet are provided with a closing element. The fish pass can be closed by applying the one or more closing elements, for instance in the case of a low level during dry periods.

Although not essential, the passage will generally form a substantially central part of the barrier. The advantage of this positioning is that the depth of a central part of the watercourse is greater than the depth of a peripheral part of the watercourse, whereby a correct operation of the barrier can in this way be guaranteed. The fish inlet and/or the fish outlet preferably also connect to a deeper (central) part of the watercourse in order to also guarantee as far as possible a correct operation of the fish pass. The fish inlet and/or the fish outlet are therefore preferably positioned close to the (central) passage of the barrier.

The invention will be elucidated on the basis of non-limitative exemplary embodiments shown in the following figures. Herein:
figure 1 is a top view of a barrier according to the invention comprising a fish pass,
figure 2 shows a cross-section A-A of the barrier according to figure 1,
figure 3 shows a cross-section B-B of the barrier according to figure 1,
figure 4 shows a cross-section C-C of the barrier according to figure 1, and
figure 5 shows a schematic representation of the water variation in the fish pass of the barrier according to figure 1.

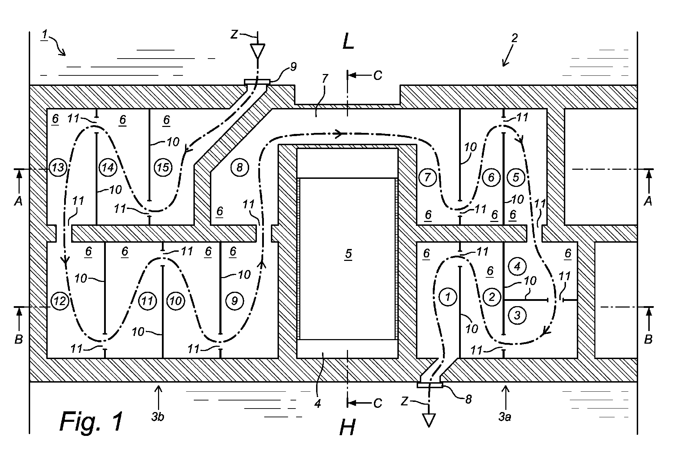

Figure 1 is a top view of a barrier 2 according to the invention comprising a fish pass 1. Barrier 2 is placed here in a watercourse and separates a higher-lying water body (H) and a lower-lying water body (L). Barrier 2 comprises for this purpose a housing 3 comprising a first compartment 3a and a second compartment 3b. Created between first compartment 3a and second compartment 3b is a passage 4 via which water can displace from the higher water body (H) to the lower water body (L). Arranged in the passage is a tiltable barrier valve 5 connected to housing 3. The tiltable barrier valve 5 is adapted to regulate the level of the higher water body (H) and the lower water body (L). Fish pass 1 is adapted to allow fish to swim from the lower water body (L) to the higher water body (H). In this exemplary embodiment fish pass 1 comprises for this purpose fifteen migration chambers 6 connected successively to each other so that a serial connection of migration chambers 6 is realized. Migration chambers 6 are also identified in the figure by means of numerals "1" to "15". Of the fifteen migration chambers 6 seven migration chambers 6 are located in the first compartment 3a and eight migration chambers 6 are located in the second compartment 3b, wherein the migration chamber "7" and migration chamber "8" are mutually connected by means of an aqueduct 7 extending through passage 4. Migration chamber "1" is connected here via a closing element 8 to the higher water body (H) and migration chamber "15" is connected here via a closing element 9 to the lower water body (L).

Successive migration chambers 6 are mutually separated by means of a baffle 10 (or wall) provided with a migration opening 11. The height positioning of migration openings 11 decreases substantially gradually in the direction of migration chamber "15", whereby the water level in migration chambers 6 decreases substantially gradually from the water level of the higher water body (H) to the water level of the lower water body (L). The size of migration openings 11 is such that water and fish can migrate via migration opening 11, but is on the other hand preferably so small that baffle 11 offers sufficient resistance to be able to realize a difference in water level between adjacent migration chambers 6. The difference in water level in mutually connecting migration chambers 6 is so small here that fish can move relatively unimpeded via migration chambers 6 from the lower water body (L) to the higher water body (H), and vice versa.

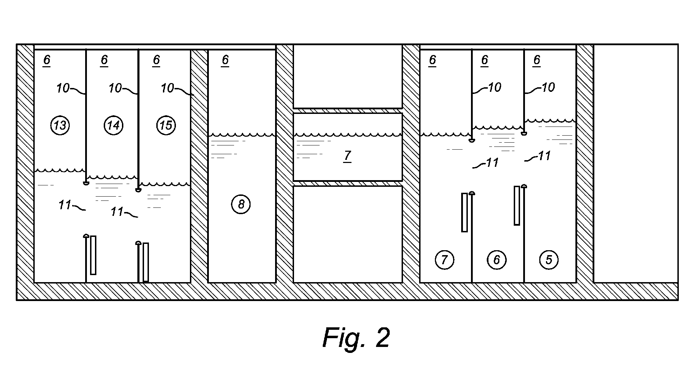

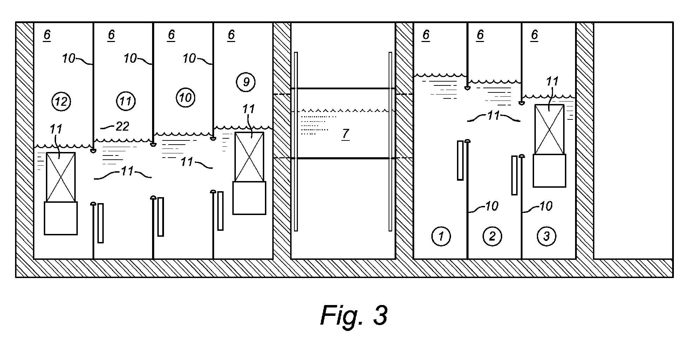

The route to be followed by fish through fish pass 1 in order to be able to swim from the lower water body (L) to the higher water body (H) is indicated by means of the curved arrow Z, wherein it is clearly visible that migration openings 11 do not lie in line with each other. The water level in migration chamber "7" and migration chamber "8" can be the same, although it is also possible to envisage the level in migration chamber "7" being slightly higher than the level in migration chamber "8". Figures 2 and 3 further show the level variation in fish pass 1. An upper side of migration chambers 6 and aqueduct 7 is preferably at least partially opened, or at least light-transmitting, whereby fish will move more quickly through fish pass 1. Hydraulic coupling of migration chambers 6 of first compartment 3a and migration chambers 6 of second compartment 3b will in fact increase the number of migration chambers 6 used in fish pass 1, whereby fish pass 1 can be applied particularly advantageously in a watercourse 3 with a relatively large drop and/or a relatively large fluctuation in the drop.

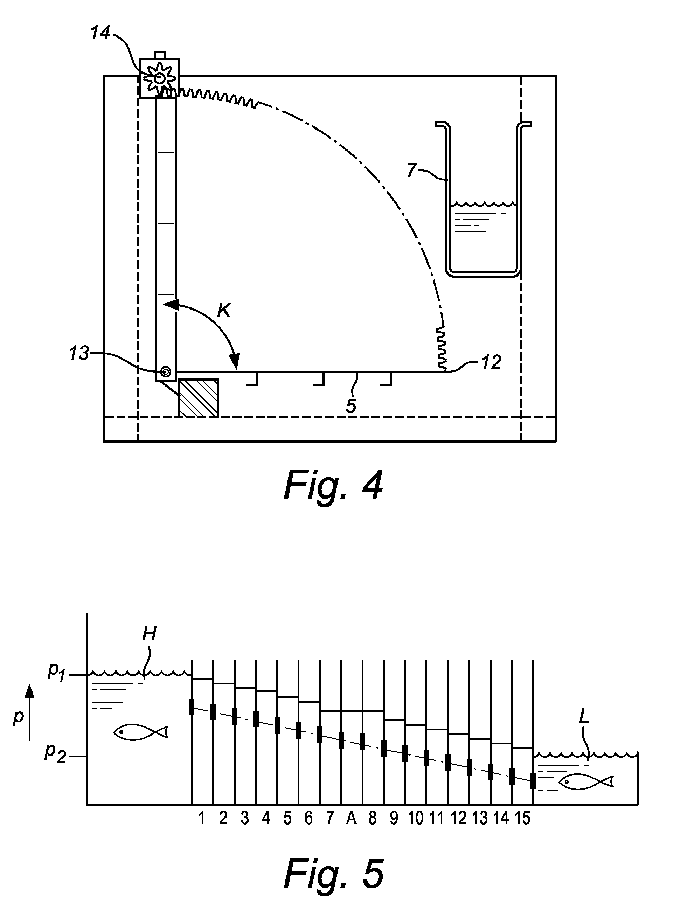

Figure 4 shows a cross-section C-C of barrier 2 according to figure 1. Shown in this figure is the passage 4 in which the tiltable barrier valve 5 and aqueduct 7 are positioned. Clearly shown is that aqueduct 7 is located at a distance from barrier valve 5, whereby aqueduct 7 does not impede tilting of barrier valve 5 about pivot axis 13 (see arrow K). Barrier valve 5 comprises a threshold 12 via which the water will flow from the higher water body (H) to the lower water body (L). The effective height of threshold 12, and thereby an intended level of the watercourse, is adjustable by means of tilting the barrier valve 5. Tilting of the barrier valve 5 can be realized by means of a toothed drive shaft 14 (or operating shaft). Rotation of drive shaft 14 will result in tilting of barrier valve 5. Rotation of drive shaft 14 can be effected manually and/or in automated manner.

Figure 5 is a schematic graphic representation of the water variation in fish pass 1 of barrier 2 according to figure 1. Shown on the y axis is the water level and on the x axis the numbering of migration chambers 6, wherein "A" represents aqueduct 7. As shown clearly in figure 5, the level falls gradually from level p₁ associated with the higher water body (H) in the direction of level p₂ associated with the lower water level (L). Migration chamber "7", aqueduct 7 and migration chamber "8" can optionally be deemed one larger migration chamber in which the water level is or could be substantially constant. Also shown in this figure is that the height positioning of migration openings 11 also decreases gradually in the direction of the lower water body (L), whereby fish can swim at a substantially constant gradient from the lower water body (L) in the direction of the higher water body (H), this generally enhancing the operation of fish pass 1.

It will be apparent that the invention is not limited to the exemplary embodiments shown and described here, but that within the scope of the appended claims numerous variants are possible which will be self-evident to the skilled person in this field.

## Claims

1. Barrier for regulating the level in a watercourse, comprising:
- a housing, which housing comprises at least one first compartment and at least one second compartment between which a passage provided with at least one threshold is positioned to allow water to flow from a first higher-lying water body to a second lower-lying water body,
- a fish pass which is substantially enclosed by the housing and via which fish can swim from the second water body to the first water body, comprising:
o a plurality of migration chambers connected in series, wherein a number of migration chambers are positioned in the first compartment and a number of migration chambers in the second compartment,
o at least one fish outlet with a water inflow opening which connects to at least one first migration chamber and is for placing in the first water body, and
o at least one fish inlet with a water outflow opening which connects to at least one final migration chamber and is for placing in the second water body.

2. Barrier as claimed in claim 1, wherein at least one migration chamber positioned in the first compartment is connected via at least one aqueduct to at least one migration chamber positioned in the second compartment.

3. Barrier as claimed in claim 2, wherein the aqueduct is positioned at a higher level than the threshold.

4. Barrier as claimed in claim 2 or 3, wherein the aqueduct is positioned at a distance from the threshold.

5. Barrier as claimed in any of the claims 2-4, wherein an upper side of the aqueduct takes an at least partially light-transmitting form.

6. Barrier as claimed in any of the foregoing claims, wherein the effective height of the threshold is adjustable.

7. Barrier as claimed in claim 6, wherein the threshold forms part of a barrier valve connected displaceably, in particular pivotally, to the housing.

8. Barrier as claimed in any of the foregoing claims, wherein successive migration chambers are separated from each other by means of a baffle, wherein each baffle is provided with at least one migration opening for migration of fish and water.

9. Barrier as claimed in claim 8, wherein the height positioning of the migration openings of successive baffles decreases in the direction of the final migration chamber.

10. Barrier as claimed in claim 9, wherein the difference in height positioning of the migration openings of successive baffles is less than or equal to 7.5 centimetres.

11. Barrier as claimed in claim 10, wherein the fish inlet and/or the fish outlet are provided with a closing element.

12. Barrier as claimed in any of the foregoing claims, wherein the passage forms a substantially central part of the barrier.

13. Barrier as claimed in any of the foregoing claims, wherein the fish inlet and/or the fish outlet are positioned close to the passage of the barrier.
